# EUROPEAN PATENT SPECIFICATION

(11) **EP 2 528 305 B1**
(45) Date of publication and mention of the grant of the patent: **01.02.2017**
(21) Application number: 12159334.7
(22) Date of filing: 13.03.2012
(51) Int. Cl.: H04L 29/14, H04L 29/08, H04L 12/24

(54) **Server connection method, information providing method for device, device adopting the same, cloud computing network, and operation method thereof**
Serververbindungsverfahren, Informationsbereitstellungsverfahren für eine Vorrichtung, Vorrichtung damit, Cloud-Rechnernetzwerk und Betriebsverfahren dafür
Procédé de connexion au serveur, procédé de fourniture d'informations pour un dispositif, dispositif adoptant ceux-ci, réseau informatique dématérialisé et son procédé de fonctionnement

(30) Priority: 27.05.2011 KR 20110050896
(43) Date of publication of application: 28.11.2012
(73) Proprietor: Samsung Electronics Co., Ltd., Suwon-si, Gyeonggi-do, 443-742 (KR)
(72) Inventor: Kim, Sun-il, Gyeonggi-do (KR)
(74) Representative: Appleyard Lees IP LLP

(56) References cited:
- WO-A1-97/29570
- US-A1- 2008 301 233
- HIDEKI SAKAUCHI ET AL: "A SELF-HEALING NETWORK WITH AN ECONOMICAL SPARE-CHANNEL ASSIGNMENT", COMMUNICATIONS : CONNECTING THE FUTURE. SAN DIEGO, DEC. 2- 5, 1990; [PROCEEDINGS OF THE GLOBAL TELECOMMUNICATIONS CONFERENCE AND EXHIBITION (GLOBECOM)], NEW YORK, IEEE, US, vol. 1 OF 03, 2 December 1990 (1990-12-02) , pages 438-443, XP000218768, ISBN: 978-0-87942-632-3

## Description

### CROSS-REFERENCE TO RELATED APPLICATIONS

This application claims priority priority from Korean Patent Application No. 2011-0050896, filed on May 27, 2011, in the Korean Intellectual Property Office.

### BACKGROUND

### 1. Field of the Invention

The present inventive concept relates to a service connection method, an information providing method for a device, a device adopting the same, a cloud computing network system, and an operation method thereof, and more particularly to a service connection method, an information providing method for a device, a device adopting the same, a cloud computing network system, and an operation method thereof, which use a Dynamic Host Configuration Protocol (DHCP) method.

### 2. Description of the Related Art

The Publication US2008301233 discloses a Peer-to-peer file transmission system having a server to relay file transmission between first and second user clients when peer-to-peer file transmission by direct connection between said clients connected to a managing system fails.

A cloud computing network (CCN) is a network service that provides various kinds of software and security solutions to a user through virtualization of a network and storage resources and even computing capability in an on-demand manner. Since this CCN service improves the network efficiency and does not cause speed reduction even in the case of traffic aggregation, it becomes possible to provide a high-quality service.

Since such a network system conceptually uses necessary programs and data through accessing of hardware and software that exists in an intangible form such as a cloud, it is called "cloud".

A DHCP server that forms a clouding computing network serves to manage a DHCP server database that is called a scope and to allocate an Internet Protocol (IP) address to a client.

A client requests an IP address from a DHCP server when connecting to a network, and receives corresponding IP information. In this case, in an option field of a corresponding packet to be transmitted, file server information to which the client is to connect is included. Accordingly, the client can update a file by connecting to a file server using the corresponding information.

However, if the file server information is not included in the option field of the corresponding packet or a DHCP server manager is not present in the case where an IP address of the file server is changed, the client is unable to connect to the file server.

### SUMMARY

According to the present invention there is provided an apparatus and method as set forth in the appended claims. Other features of the invention will be apparent from the dependent claims, and the description which follows. One or more exemplary embodiments provide a service connection method, an information providing method for a device, a device adopting the same, a cloud computing network system, and an operation method thereof, which can request and receive file server information from other client devices.

In accordance with an aspect of an exemplary embodiment, a server connection method for a device includes if a connection of a client device to a preset file server is not normally performed, requesting connection information of the preset file server by the client device from another client device in the same network; and if the connection information is received by the client device from the other client device, performing the connection to the file server by the client device using the received connection information.

A case where the file server connection is not normally performed may be a case where the preset connection information is not present in a received Internet Protocol (IP) information packet or the file server connection using the preset connection information fails.

The server connection method may further include storing the received connection information by the client device or updating the stored connection information by the client device using the received connection information.

The connection information request by the client device may include at least one of a destination IP address, a port number, and a source IP address.

The received connection information may include at least one of a destination IP address, a port number, a source IP address, and an IP address of the file server.

In accordance with another aspect of an exemplary embodiment, an information providing method for a device includes receiving a connection information request for a preset file server from an external client device; confirming connection information of the preset file server according to the connection information request; and transmitting the confirmed connection information to the external client device.

The connection information request may include at least one of a destination IP address, a port number, and a source IP address, and the connection information received in the transmission step may include at least one of a destination IP address, a port number, a source IP address, and an IP address of the file server.

The information providing method may further include deciding whether the connection information of the preset file server is present; and if the connection information is present, periodically confirming whether the connection information request is received through the external client device.

In accordance with still another aspect of an exemplary embodiment, an operation performing method for a cloud computing network system includes if connection to a preset file server is not normally performed, requesting, by a first client device, connection information of the file server from a second client device in the same network; if the connection information request for the file server is received, confirming, by the second client device, the connection information of the file server according to the connection information request; transmitting, by the second client device, the confirmed connection information to the first client device; and requesting, by the first client device that has received the connection information, the connection from the file server using the received connection information.

In accordance with still another aspect of an exemplary embodiment, a device includes a communication unit communicating with an external client server and a file server; and a control unit requesting connection information of a preset file server from a client device in the same network if connection to the preset file server is not normally performed, and requesting the connection from the file server using the received connection information if the connection information is received from the other client device.

A case where the file server connection is not normally performed may be a case where the preset connection information is not present in a received Internet Protocol (IP) information packet or the file server connection using the preset connection information fails.

The device according to an embodiment of the present invention may further include a storage unit storing the received connection information or updating and storing the stored connection information using the received connection information.

The connection information request may include at least one of a destination IP address, a port number, and a source IP address.

The received connection information may include at least one of a destination IP address, a port number, a source IP address, and an IP address of the file server.

The device may be a client device that is applied to a client network computing system.

In accordance with still another aspect of an exemplary embodiment, a device includes a communication unit receiving a connection information request for a preset file server from an external client device; and a control unit confirming connection information of the preset file server according to the connection information request and transmitting the confirmed connection information to the external client device.

The connection information request may include at least one of a destination Internet Protocol (IP) address, a port number, and a source IP address, and the confirmed connection information may include at least one of a destination IP address, a port number, a source IP address, and an IP address of the file server.

The control unit may decide whether the connection information of the preset file server is present, and if the connection information is present, periodically confirm whether the connection information request is received through the external client device.

In accordance with still another aspect of an exemplary embodiment, a cloud computing network system includes a first client device requesting connection information of a preset file server from a second client device in the same network if connection to the preset file server is not normally performed, and requesting the connection from the file server using the received connection information if the connection information is received from the second client device; and the second client device confirming the connection information of the file server according to the connection information request and transmitting the confirmed connection information to the first client device if the connection information request for the file server is received from the first client device.

Accordingly, the file server information can be updated without help of a DHCP server manager.

### BRIEF DESCRIPTION OF THE DRAWINGS

The above and other aspects, features and advantages of the present inventive concept will be more apparent from the following detailed description when taken in conjunction with the accompanying drawings, in which:
FIG. 1 is a diagram illustrating the configuration of a network system according to an exemplary embodiment;
FIG. 2 is a diagram illustrating the operation between a DHCP server and a client device according to an exemplary embodiment;
FIG. 3A is a block diagram illustrating the configuration of a client device according to an exemplary embodiment;
FIG. 3B is a block diagram illustrating the configuration of a client device according to another exemplary embodiment; and
FIG. 4 is a flowchart illustrating a server connection method according to an exemplary embodiment.

### DETAILED DESCRIPTION OF EMBODIMENTS

Hereinafter, exemplary embodiments of the present inventive concept are described in detail with reference to the accompanying drawings.

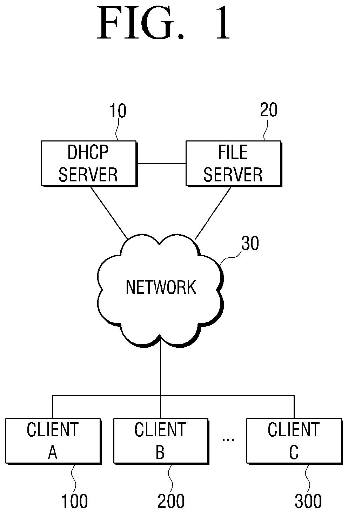

FIG. 1 is a diagram illustrating the configuration of a network system according to an exemplary embodiment.

Referring to FIG. 1, a network system according to an exemplary embodiment includes a DHCP server 10, a file server 20, a network 30, and client devices 100, 200, and 300.

The network system may be implemented by a cloud computing network system. Here, a cloud computing network (CCN) is a network service that provides various kinds of software and security solutions to a user through virtualization of a network and storage resources and even computing capability in an on-demand manner. Since this CCN service improves the network efficiency and does not cause speed reduction even in the case of traffic aggregation, it becomes possible to provide a high-quality service.

The DHCP server 10, the file server 20, and the client devices 100, 200, and 300 illustrated in FIG. 1 are mutually connected through a network 30 t such as the Internet.

The DHCP server 10 serves to manage a DHCP server database (not illustrated) that is called a scope and to allocate an IP address to a DHCP client. In the DHCP server database (not illustrated), parameters, such as IP addresses to be allocated, a subnet mask, a gateway, client MAC addresses, an address lease length, and the like, may be stored. Here, the DHCP is a communication protocol for automatically allocating and managing set information that is required to execute TCP/IP communication, and the detailed description thereof will be omitted.

The file server 20 stores files provided from a content provider that provides large-capacity data, such as a firmware upgrade file, an application program file, a game program file, a text data file, a document file, a picture file, a music file, a moving image file, a barcode file, and the like. The files stored in the file server 20 may be provided to the client devices 100, 200, and 300 according to a request from the client devices 100, 200, and 300.

The client devices 100, 200, and 300 may be implemented by devices which have basic memories without hard disks or peripheral devices, and are operated in conjunction with a server and a network. Specifically, the client devices may be implemented by personal computers such as computers and notebook computers, diverse handheld terminals having wireless Internet functions, such as PDAs (Personal Digital Assistants), portable phones, smart phones, and tablet PCs, and broadcast receiving devices such as digital TVs and the like. Here, the client devices 100, 200, and 300 may include memories (not illustrated) for storing at least client software programs. In this case, the memories may be implemented by, for example but not limited to, flash memories.

That is, the client devices 100, 200, and 300, which may have no hard disk or peripheral storage device, may connect to the server and download software whenever they require programs, and the server side unitarily manages data.

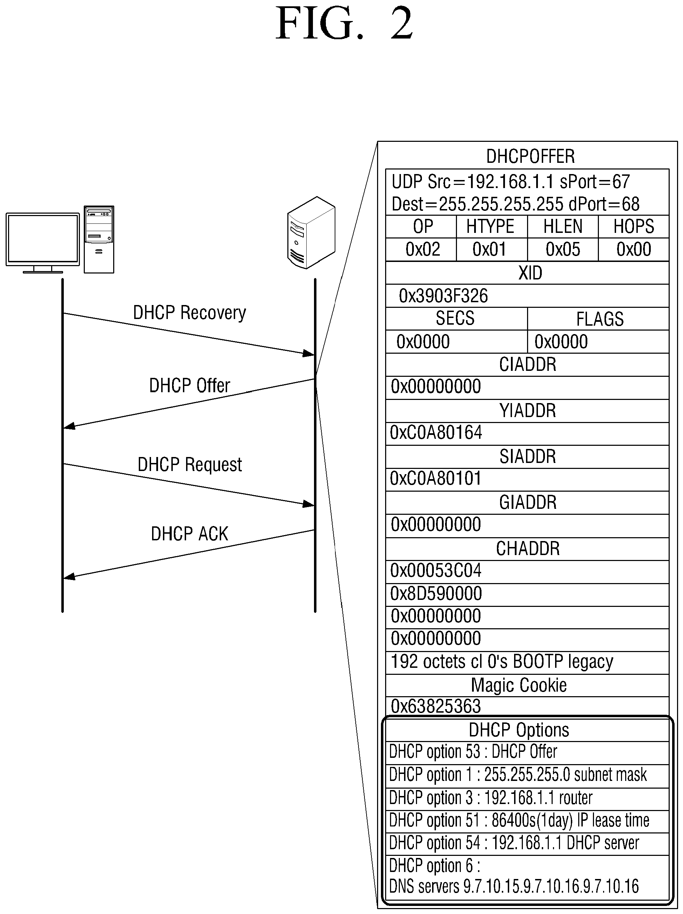

FIG. 2 is a diagram illustrating the operation between a DHCP server and a client device according to an exemplary embodiment.

Referring to FIG. 2, the client device 100 performs an IP request from a DHCP server 10 when it boots and connects to a network (DHCP recovery).

Then, the DHCP server 10 transmits an IP information packet to the client device 100 (DHCP offer). In this case, necessary information, which may include file server information to which the client device 100 connects, is added to an option field region of the IP information packet in which additional information can be stored.

Accordingly, the client device 100 can download and/or upgrade firmware by connecting to the file server using the file server information stored in the option field region.

However, if the IP of the file server is changed or the IP address is not present in the option field region, the client device 100 may request the corresponding information from another client device. Hereinafter, the corresponding configuration will be described in detail with reference to the drawings.

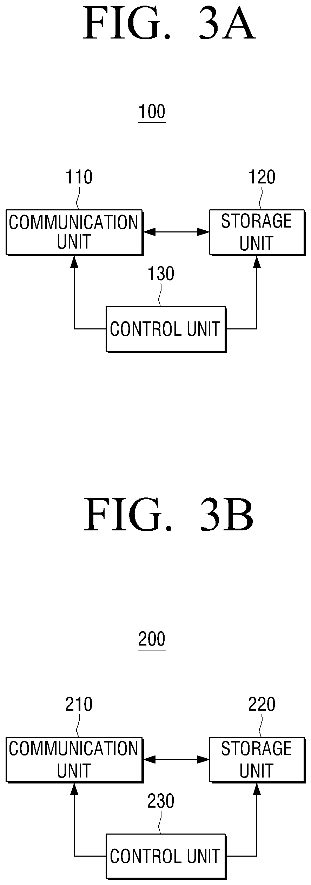

FIG. 3A is a block diagram illustrating the configuration of a client device according to an exemplary embodiment.

Referring to FIG. 3A, the client device 100 includes a communication unit 110, a storage unit 120, and a control unit 130.

The client device 100 may be a client device in a cloud computing network system as described above, and may be implemented to download programs or data any time and any place by connecting to the file server 20.

That is, the client device 100 may be implemented to have only a basic memory without any hard disk or peripheral device, and to operate through a server and a network.

The communication unit 110 may perform communication with the file server through the network. That is, the client device 100 may download or upgrade firmware from the file server through the communication unit 110.

Specifically, the communication unit 110 may attempt to connect to the file server using the preset connection information.

Further, the communication unit 110 may perform communication with another client device in the same network.

The storage unit 120 may store information that is necessary for at least the operation of the client device 100.

For example, the storage unit 120 may be implemented by an internal memory for storing at least the client programs such as user configuration information.

The control unit 130 may control the whole operation of the client device 100.

In particular, the control unit 130 may confirm whether preset connection information for connecting to the file server is present.

Specifically, the control unit 130 may confirm whether file server connection information is present in the option field region, in which additional information can be stored, in the IP information packet that is provided from the DHCP server.

If the file server connection information, that is, filer server IP address information, is present, the control unit 130 may control the communication unit 110 to attempt to connect to the file server using the corresponding IP address information.

Further, if the connection attempt fails due to the IP address change of the file server or the like, the control unit 130 may control the communication unit 110 to request the file server connection information from another client device in the same network.

Here, a request packet for requesting the file server connection information may include at least one of a destination IP address, a port number, and a source IP address. In this case, the destination IP address may be an IP address for multicast or broadcast with respect to all the client devices in the network. For example, the destination IP address may be 255.255.255.255 for the request broadcast. Further, the source IP address may be an IP address that the client device 100 is allocated from the DHCP server 10.

Further, if the connection information is received from another client device, the control unit 130 may request the connection from the file server using the received connection information.

Here, the received connection information, that is, the response packet may include at least one of a destination IP address, a port number, a source IP address, and an IP address of the file server. Here, the source IP address may be the IP address of the client device 100 that performs confirmation when the request is received.

The response packet may further include information to be provided to the client devices in addition to the IP address for the file server. For example, if the client device 200 receives information such as latest firmware version or the like, the corresponding information may be included in the response packet. Accordingly, the device 100 that has received the response packet can decide whether the firmware upgrade is necessary using the corresponding information.

Further, the control unit 130 may operate to update the preset connection information using the received connection information and to store the updated information in the storage unit 120.

FIG. 3B is a block diagram illustrating the configuration of a client device according to another exemplary embodiment.

Referring to FIG. 3B, the client device 200 includes a communication unit 210, a storage unit 220, and a control unit 230.

The client device 200 in FIG. 3B may be implemented by a client device that receives the connection information request as described above with reference to FIG. 3A.

On the other hand, although, for convenience in explanation, the case of transmitting the request information and the case of receiving the request information are dividedly explained with reference to FIGS. 2A and 2B, it could be easily recognizable by those skilled in the art that the functions explained with reference to FIGS. 2A and 2B can be implemented by a single client device.

The communication unit 210 may perform communication with another client device in the same network.

Specifically, the communication unit 210 may receive a request for the connection information of the file server from an external client device, for example client device 100 in FIG. 1. Here, the request packet for requesting the file server connection information may include at least one of a destination IP address, a port number, and a source IP address.

Further, the communication unit 210 may transmit the connection information of the file server to the external client device that requested the connection information under the control of the control unit 230.

The storage unit 220 may store the information that is necessary for at least the operation of the client device 200.

For example, the storage unit 220 may be implemented by an internal memory for storing at least the client programs such as user configuration information.

In particular, the storage unit 220 may store information on the file server that is provided from the DHCP server or another client device.

The control unit 230 may control the operation of the client device 100.

In particular, if the connection information request for the file server is received through the communication unit 210, the control unit 230 may confirm whether the connection information for the file server is pre-stored.

If the connection information for the file server is pre-stored, the control unit 230 may transmit the corresponding information to the client device that requested the corresponding information.

Here, the received connection information, that is, the response packet may include at least one of a destination IP address, a port number, a source IP address, and an IP address of the file server.

Further, the control unit operates to update the preset connection information using the received connection information and to store the updated information in the storage unit 120.

Further, the control unit 230 decides whether the connection information for the preset file server is present, and if the corresponding connection information is present, the control unit 230 may periodically confirm whether the connection information request is received through the external connection port.

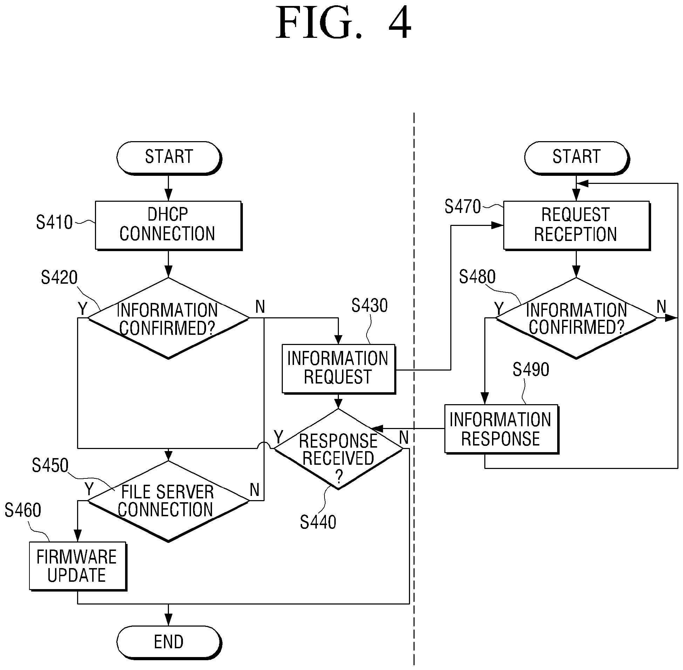

FIG. 4 is a flowchart illustrating a server connection method according to an exemplary embodiment.

Referring to FIG. 4, if the client device 100 is booted, it first performs the DHCP connection (S410). Here, since the DHCP connection is performed by the method illustrated in FIG. 2, the detailed description thereof will be omitted.

Then, the client device 100 confirms whether the file server IP information is present in a DHCP offer option field (see FIG. 2) that is received in step S410 (S420).

If the file server IP information is not present as determined in step S420, the client device 100 requests the corresponding information from another client device 200 (S430). In this case, the request packet may include at least one of a destination IP address, a port number, and a source IP address.

If a response is received after the information request in step S430 ("Y" in S440), the client device 100 attempts to connect to the file server, and if the connection is normally performed, it updates the firmware from the file server (S460). Here, the response packet may include at least one of a destination IP address, a port number, a source IP address, and an IP address of the file server. A case where the file server connection is normally performed is a case where the preset connection information is present in a received IP information packet or the file server connection using the preset connection information is accomplished. A case where the file server connection is not normally performed is a case where the preset connection information is not present in a received IP information packet or the file server connection using the preset connection information fails.

On the other hand, the other client device 200, which has received the information request from the client device 100 (S470), confirms whether the file server information that corresponds to the request is stored (S480). In this case, the client device 200 decides whether the connection information for the preset file server is present, and if the connection information is present, it periodically confirms whether the connection information request is received through the external connection port. For example, the client device 200 can start a TCP/IP thread for the corresponding port.

If the corresponding information is present ("Y" in S480) as the result of the confirmation in step S480, the client device 200 can transmit the corresponding information to the client device 100 that has requested the file server information (S490).

Further, if the file server IP information is present as the result of the confirmation in step S420, the client device 100 attempts to connect to the file server using the corresponding information (S450).

If the connection is normally performed as the result of the connection attempt in step S450, the client device 100 updates the firmware from the file server (S460).

As described above, according to the present inventive concept, if the client device fails to connect to the file server, it may perform the connection using another client that is in the same network. Further, even in the case where the IP address of the file server is changed and only one client updates the file server information, the updated contents can be applied to all the clients in the same network. Accordingly, the file server information can be updated without help of the DHCP server manager.

Further, the present inventive concept may include a computer readable recording medium that which embodies programs for causing a computer or processor to execute the server connection method and the information providing method for the device as described above. The computer readable recording medium includes all kinds of recording media in which data that can be read by a computer system is stored. Examples of the computer readable recording media may be a ROM, a RAM, a CD-ROM, a magnetic tape, a floppy disk, an optical date storage device, and the like, and the computer readable recording medium may be distributed to the computer system that is connected to the network, and codes that can be read by a computer in a distribution manner may be stored and executed through the recording medium.

Although a few preferred embodiments have been shown and described, it will be appreciated by those skilled in the art that various changes and modifications might be made without departing from the scope of the invention, as defined in the appended claims.

## Claims

1. A server connection method for a client device (100), the method being **characterized by** the following steps:
requesting connection information for connecting the client device (100) to a preset file server (10,20) from an other client device (200) in the same network (100) when a connection of the client device (100) to the preset file server (10,20) is not normally performed; and
performing the connection to the file server (10,20) by the client device (100) using the received connection information when the connection information is received from the other client device (200).

2. The server connection method as claimed in claim 1, wherein a case where the file server connection is not normally performed is a case where the preset connection information is not present in a received Internet Protocol (IP) information packet or the file server connection using the preset connection information fails.

3. The server connection method as claimed in claim 1 or 2, further comprising storing the received connection information by the client device (100) or updating the stored connection information by the client device (100) using the received connection information.

4. The server connection method as claimed in claim 1 to 3, wherein a connection information request by the client device (100) includes at least one of a destination IP address, a port number, and a source IP address.

5. The server connection method as claimed in any of claims 1 to 4, wherein the received connection information includes at least one of a destination IP address, a port number, a source IP address, and an IP address of the file server (10,20).

6. An information providing method for a first and second client device in the same network (100, 200), the method being **characterized by** the following steps:
receiving by the second client device (200) a connection information request for connecting the client device (100) to a preset file server (10,20) from the first client device (100);
confirming connection information for connecting the client device (100) to the preset file server (10,20) according to the connection information request; and
transmitting the confirmed connection information to the first client device (100).

7. The information providing method as claimed in claim 6, wherein the connection information request includes at least one of a destination IP address, a port number, and a source IP address, and
the connection information received in the transmission step includes at least one of a destination IP address, a port number, a source IP address, and an IP address of the file server.

8. The information providing method as claimed in claim 6 or 7, further comprising:
deciding whether the connection information of the preset file server (10,20) is present; and
if the connection information is present, periodically confirming whether the connection information request is received through the external client device.

9. An operation performing method for a cloud computing network system, the method being **characterized by** the following steps:
requesting, by a first client device (100), connection information for connecting the first client device (100) to a preset file server (10,20) from
a second client device (200) in the same network when connection to a preset file server (10,20) is not normally performed;
confirming, by the second client device (200), the connection information of the file server (10,20) according to the connection information request when the connection information request for the file server is received from the first client device (100);
transmitting, by the second client device (200), the confirmed connection information to the first client device (100); and
requesting, by the first client device (100) that has received the connection information, the connection from the file server (10,20) using the received connection information.

10. A client device (100) comprising:
a communication unit (110) communicating with an external client server and a file server (10,20); being **characterized by** further comprising:
a control unit (130) requesting connection information for connecting the client device (100) to a preset file server (10,20) from an other client device (200) in the same network when connection to the preset file server (10,20) is not normally performed, and requesting the connection to the file server (10,20) using the received connection information when the connection information is received from the other client device (200).

11. The client device as claimed in claim 10, wherein a case where the file server connection is not normally performed is a case where the preset connection information is not present in a received Internet Protocol (IP) information packet or the file server connection using the preset connection information fails.

12. The client device as claimed in claim 10 or 11, further comprising a storage unit (120) storing the received connection information or updating and storing the stored connection information using the received connection information.

13. The client device as claimed in any of claims 10, 11 or 12 wherein the received connection information includes at least one of a destination IP address, a port number, a source IP address, and an IP address of the file server.

14. A device (200) being **characterized by** comprising:
a communication unit (210) receiving a connection information request connecting a client device (100) to a preset file server (10,20) from an external client device (100); and
a control unit (230) confirming connection information for connecting the first client device (100) to the preset file server (10,20) according to the connection information request and transmitting the confirmed connection information to the first client device (100).

15. A cloud computing network system being **characterized by** comprising:
a first client device (100) requesting connection information for connecting the first client device (100) to a preset file server (10,20) from
a second client device (200) in the same network when connection to the preset file server (10,20) is not normally performed, and requesting the connection to the file server (10,20) using the received connection information when the connection information is received from the second client device (200); and
the second client device (200) confirming the connection information of the file server (10,20) according to the connection information request and transmitting the confirmed connection information to the first client device (100) if the connection information request for the file server (10,20) is received from the first client device (100).

## Patentansprüche

1. Serververbindungsverfahren für eine Client-Vorrichtung (100), wobei das Verfahren durch die folgenden Schritte gekennzeichnet ist:
Anfordern einer Verbindungsinformation zur Verbindung der Client-Vorrichtung (100) mit einem voreingestellten Dateiserver (10, 20) von einer anderen Client-Vorrichtung (200) in demselben Netzwerk (100), wenn eine Verbindung der Client-Vorrichtung (100) mit dem voreingestellten Dateiserver (10, 20) nicht normal durchgeführt wird; und
Durchführen der Verbindung mit dem Dateiserver (10, 20) durch die Client-Vorrichtung (100) unter Verwendung der empfangenen Verbindungsinformation, wenn die Verbindungsinformation von der anderen Client-Vorrichtung (200) empfangen wird.

2. Serververbindungsverfahren nach Anspruch 1, wobei ein Fall, in dem die Verbindung des Dateiservers nicht normal durchgeführt wird, ein Fall ist, in dem die voreingestellte Verbindungsinformation in einem empfangenen Internetprotokoll(IP)-Informationspaket nicht vorhanden ist oder die Verbindung des Dateiservers unter Verwendung der voreingestellten Verbindungsinformation fehlschlägt.

3. Serververbindungsverfahren nach Anspruch 1 oder 2, ferner umfassend das Speichern der empfangenen Verbindungsinformation durch die Client-Vorrichtung (100) oder das Aktualisieren der gespeicherten Verbindungsinformation durch die Client-Vorrichtung (100) unter Verwendung der empfangenen Verbindungsinformation.

4. Serververbindungsverfahren nach Anspruch 1 bis 3, wobei eine Verbindungsinformationsanforderung durch die Client-Vorrichtung(100) mindestens eine von einer Ziel-IP-Adresse, einer Portnummer und einer Quell-IP-Adresse enthält.

5. Serververbindungsverfahren nach einem der Ansprüche 1 bis 4, wobei die empfangene Verbindungsinformation mindestens eine von einer Ziel-IP-Adresse, einer Portnummer, einer Quell-IP-Adresse und einer IP-Adresse des Dateiservers (10, 20) enthält.

6. Informationsbereitstellungsverfahren für eine erste und eine zweite Client-Vorrichtung in demselben Netzwerk (100, 200), wobei das Verfahren durch die folgenden Schritte gekennzeichnet ist:
Empfangen durch die zweite Client-Vorrichtung (200) einer Verbindungsinformationsanforderung zum Verbinden der Client-Vorrichtung (100) mit einem voreingestellten Dateiserver (10, 20) von der ersten Client-Vorrichtung (100);
Bestätigen der Verbindungsinformation zum Verbinden der Client-Vorrichtung (100) mit dem voreingestellten Dateiserver (10, 20) gemäß der Verbindungsinformationsanforderung; und
Übertragen der bestätigten Verbindungsinformation an die erste Client-Vorrichtung (100).

7. Informationsbereitstellungsverfahren nach Anspruch 6, wobei die Verbindungsinformationsanforderung mindestens eine von einer Ziel-IP-Adresse, einer Portnummer und einer Quell-IP-Adresse enthält, und
die in dem Übertragungsschritt empfangene Verbindungsinformation mindestens eine von einer Ziel-IP-Adresse, einer Portnummer, einer Quell-IP-Adresse und einer IP-Adresse des Dateiservers enthält.

8. Informationsbereitstellungsverfahren nach Anspruch 6 oder 7, ferner umfassend:
Entscheiden, ob die Verbindungsinformation des voreingestellten Dateiservers (10, 20) vorhanden ist; und
wenn die Verbindungsinformation vorhanden ist, periodisches Bestätigen, ob die Verbindungsinformationsanforderung durch die externe Client-Vorrichtung empfangen wird.

9. Verfahren zur Vorgangsdurchführung für ein Cloud-Computing-Netzwerksystem, wobei das Verfahren durch die folgenden Schritte gekennzeichnet ist:
Anfordern, durch eine erste Client-Vorrichtung (100), einer Verbindungsinformation zum Verbinden der ersten Client-Vorrichtung (100) mit einem voreingestellten Dateiserver (10, 20) von einer zweiten Client-Vorrichtung (200) in demselben Netzwerk, wenn eine Verbindung mit einem voreingestellten Dateiserver (10, 20) nicht normal durchgeführt wird;
Bestätigen, durch die zweite Client-Vorrichtung (200), der Verbindungsinformation des Dateiservers (10, 20) gemäß der Verbindungsinformationsanforderung, wenn die Verbindungsinformationsanforderung für den Dateiserver von der ersten Client-Vorrichtung (100) empfangen wird;
Übertragen, durch die zweite Client-Vorrichtung (200), der bestätigten Verbindungsinformation an die erste Client-Vorrichtung(100); und
Anfordern, durch die erste Client-Vorrichtung (100), welche die Verbindungsinformation empfangen hat, der Verbindung von dem Dateiserver (10, 20) unter Verwendung der empfangenen Verbindungsinformation.

10. Client-Vorrichtung (100), umfassend:
eine Kommunikationseinheit (110), die mit einem externen Client-Server und einem Dateiserver (10, 20) kommuniziert; **dadurch gekennzeichnet, dass** sie ferner Folgendes umfasst:
eine Steuereinheit (130), die eine Verbindungsinformation zum Verbinden der Client-Vorrichtung (100) mit einem voreingestellten Dateiserver (10, 20) von einer anderen Client-Vorrichtung (200) in demselben Netzwerk anfordert, wenn eine Verbindung mit dem voreingestellten Dateiserver (10, 20) nicht normal durchgeführt wird, und die Verbindung mit dem Dateiserver (10, 20) unter Verwendung der empfangenen Verbindungsinformation anfordert, wenn die Verbindungsinformation von der anderen Client-Vorrichtung (200) empfangen wird.

11. Client-Vorrichtung nach Anspruch 10, wobei ein Fall, in dem die Verbindung des Dateiservers nicht normal durchgeführt wird, ein Fall ist, in dem die voreingestellte Verbindungsinformation in einem empfangenen Internetprotokoll(IP)-Informationspaket nicht vorhanden ist oder die Verbindung des Dateiservers unter Verwendung der voreingestellten Verbindungsinformation fehlschlägt.

12. Client-Vorrichtung nach Anspruch 10 oder 11, ferner umfassend eine Speichereinheit (120), welche die empfangene Verbindungsinformation speichert oder die gespeicherte Verbindungsinformation unter Verwendung der empfangenen Verbindungsinformation aktualisiert und speichert.

13. Client-Vorrichtung nach einem der Ansprüche 10, 11 oder 12, wobei die empfangene Verbindungsinformation mindestens eine von einer Ziel-IP-Adresse, einer Portnummer, einer Quell-IP-Adresse und einer IP-Adresse des Dateiservers enthält.

14. Vorrichtung (200), **dadurch gekennzeichnet, dass** sie Folgendes umfasst:
eine Kommunikationseinheit (210), die eine Verbindungsinformationsanforderung zum Verbinden einer Client-Vorrichtung (100) mit einem voreingestellten Dateiserver (10, 20) von einer externen Client-Vorrichtung (100) empfängt; und
eine Steuereinheit (230), welche eine Verbindungsinformation zum Verbinden der ersten Client-Vorrichtung (100) mit dem voreingestellten Dateiserver (10, 20) gemäß der Verbindungsinformationsanforderung bestätigt und die bestätigte Verbindungsinformation an die erste Client-Vorrichtung (100) überträgt.

15. Cloud-Computing-Netzwerksystem, **dadurch gekennzeichnet, dass** es Folgendes umfasst:
eine erste Client-Vorrichtung (100), die eine Verbindungsinformation zum Verbinden der ersten Client-Vorrichtung (100) mit einem voreingestellten Dateiserver (10, 20) von einer zweiten Client-Vorrichtung (200) in demselben Netzwerk anfordert, wenn eine Verbindung mit dem voreingestellten Dateiserver (10, 20) nicht normal durchgeführt wird, und die Verbindung mit dem Dateiserver (10, 20) unter Verwendung der empfangenen Verbindungsinformation anfordert, wenn die Verbindungsinformation von der zweiten Client-Vorrichtung (200) empfangen wird; und
die zweite Client-Vorrichtung (200), welche die Verbindungsinformation des Dateiservers (10, 20) gemäß der Verbindungsinformationsanforderung bestätigt und die bestätigte Verbindungsinformation an die erste Client-Vorrichtung (100) überträgt, wenn die Verbindungsinformationsanforderung für den Dateiserver (10, 20) von der ersten Client-Vorrichtung (100) empfangen wird.

## Revendications

1. Procédé de connexion au serveur pour un dispositif client (100), le procédé étant **caractérisé par** les étapes suivantes consistant à :
demander des informations de connexion pour connecter le dispositif client (100) à un serveur de fichiers prédéterminé (10, 20) à partir d'un autre dispositif client (200) dans le même réseau (100) lorsqu'une connexion du dispositif client (100) au serveur de fichiers prédéterminé (10, 20) n'est pas réalisée normalement ; et
réaliser la connexion au serveur de fichiers (10, 20) par le dispositif client (100) à l'aide des informations de connexion reçues lorsque les informations de connexion sont reçues de l'autre dispositif client (200).

2. Procédé de connexion au serveur selon la revendication 1, dans lequel un cas où la connexion au serveur de fichiers n'est pas réalisée normalement, est un cas où les informations de connexion prédéterminées ne sont pas présentes dans un paquet d'informations de Protocole Internet (IP) prédéterminées ou la connexion au serveur de fichiers à l'aide des informations de connexion prédéterminées échoue.

3. Procédé de connexion au serveur selon la revendication 1 ou 2, consistant en outre à stocker les informations de connexion reçues par le dispositif client (100) ou à mettre à jour les informations de connexion stockées par le dispositif client (100) à l'aide des informations de connexion reçues.

4. Procédé de connexion au serveur selon la revendication 1 à 3, dans lequel une demande d'informations de connexion par le dispositif client (100) comprend une adresse IP de destination et/ou un numéro de port et/ou une adresse IP source.

5. Procédé de connexion au serveur selon l'une quelconque des revendications 1 à 4, dans lequel les informations de connexion reçues comprennent une adresse IP de destination et/ou un numéro de port et/ou une adresse IP source et/ou une adresse IP du serveur de fichiers (10, 20).

6. Procédé de fourniture d'informations pour un premier et un second dispositif client dans le même réseau (100, 200), le procédé étant **caractérisé par** les étapes suivantes consistant à :
recevoir, au moyen du second dispositif client (200), une demande d'informations de connexion pour connecter le dispositif client (100) à un serveur de fichiers prédéterminé (10, 20) à partir du premier dispositif client (100) ;
confirmer des informations de connexion pour connecter le dispositif client (100) au serveur de fichiers prédéterminé (10, 20) en fonction de la demande d'informations de connexion ; et
transmettre les informations de connexion confirmées au premier dispositif client (100).

7. Procédé de fourniture d'informations selon la revendication 6, dans lequel la demande d'informations de connexion comprend une adresse IP de destination et/ou un numéro de port et/ou une adresse IP source, et les informations de connexion reçues au cours de l'étape de transmission comprennent une adresse IP de destination et/ou un numéro de port et/ou une adresse IP source et/ou une adresse IP du serveur de fichiers.

8. Procédé de fourniture d'informations selon la revendication 6 ou 7, consistant en outre à :
décider si les informations de connexion du serveur de fichiers prédéterminé (10, 20) sont présentes ; et
si les informations de connexion sont présentes, confirmer périodiquement si la demande d'informations de connexion est reçue au moyen du dispositif client externe.

9. Procédé de réalisation d'opération pour un système de réseau infonuagique, le procédé étant **caractérisé par** les étapes suivantes consistant à :
demander, au moyen d'un premier dispositif client (100), des informations de connexion pour connecter le premier dispositif client (100) à un serveur de fichiers prédéterminé (10, 20) à partir d'un second dispositif client (200) dans le même réseau lorsqu'une connexion à un serveur de fichiers prédéterminé (10, 20) n'est pas réalisée normalement ;
confirmer, au moyen du second dispositif client (200), les informations de connexion du serveur de fichiers (10, 20) en fonction de la demande d'informations de connexion lorsque la demande d'informations de connexion pour le serveur de fichiers est reçue du premier dispositif client (100) ;
transmettre, au moyen du second dispositif client (200), les informations de connexion confirmées au premier dispositif client (100) ; et
demander, au moyen du premier dispositif client (100) qui a reçu les informations de connexion, la connexion depuis le serveur de fichiers (10, 20) à l'aide des informations de connexion reçues.

10. Dispositif client (100) comprenant :
une unité de communication (110) communiquant avec un client-serveur externe et un serveur de fichiers (10, 20) ; étant **caractérisé par le fait qu'**il comprend en outre :
une unité de commande (130) demandant des informations de connexion pour connecter le dispositif client (100) à un serveur de fichiers prédéterminé (10, 20) à partir d'un autre dispositif client (200) dans le même réseau lorsqu'une connexion au serveur de fichiers prédéterminé (10, 20) n'est pas réalisée normalement, et demander la connexion au serveur de fichiers (10, 20) à l'aide des informations de connexion reçues lorsque les informations de connexion sont reçues de l'autre dispositif client (200).

11. Dispositif client selon la revendication 10, dans lequel un cas où la connexion au serveur de fichiers n'est pas réalisée normalement, est un cas où les informations de connexion prédéterminées ne sont pas présentes dans un paquet d'informations de Protocole Internet (IP) prédéterminées ou la connexion au serveur de fichiers à l'aide des informations de connexion prédéterminées échoue.

12. Dispositif client selon la revendication 10 ou 11, comprenant en outre une unité de stockage (120) stockant les informations de connexion reçues ou mettant à jour et stockant les informations de connexion stockées à l'aide des informations de connexion reçues.

13. Dispositif client selon l'une quelconque des revendications 10, 11 ou 12, dans lequel les informations de connexion reçues comprennent une adresse IP de destination et/ou un numéro de port et/ou une adresse IP source et/ou une adresse IP du serveur de fichiers.

14. Dispositif (200) qui est **caractérisé par le fait qu'**il comprend :
une unité de communication (210) recevant une demande d'informations de connexion qui connecte un dispositif client (100) à un serveur de fichiers prédéterminé (10, 20) à partir d'un dispositif de client externe (100) ; et
une unité de commande (230) qui confirme les informations de connexion pour connecter le premier dispositif client (100) au serveur de fichiers prédéterminé (10, 20) en fonction de la demande d'informations de connexion et transmettant les informations de connexion confirmées au premier dispositif client (100).

15. Système de réseau infonuagique qui est **caractérisé par le fait qu'**il comprend :
un premier dispositif client (100) demandant des informations de connexion pour connecter le premier dispositif client (100) à un serveur de fichiers prédéterminé (10, 20) à partir d'un second dispositif client (200) dans le même réseau lorsqu'une connexion au serveur de fichiers prédéterminé (10, 20) n'est pas réalisée normalement, et demandant la connexion au serveur de fichiers (10, 20) à l'aide des informations de connexion reçues lorsque les informations de connexion sont reçues du second dispositif client (200) ; et
le second dispositif client (200) confirmant les informations de connexion du serveur de fichiers (10, 20) en fonction de la demande d'informations de connexion et transmettant les informations de connexion confirmées au premier dispositif client (100) si la demande d'informations de connexion pour le serveur de fichiers (10, 20) est reçue du premier dispositif client (100).
